# EUROPÄISCHE PATENTSCHRIFT

(11) **EP 1 091 205 B1**
(45) Veröffentlichungstag und Bekanntmachung des Hinweises auf die Patenterteilung: **16.02.2011**
(21) Anmeldenummer: 00119806.8
(22) Anmeldetag: 12.09.2000
(51) Int. Cl.: G01N 21/47, G01N 21/31, G01N 21/01, G01N 21/51

(54) **Spektralphotometrische und nephelometrische Detektionseinheit**
Spectrophotometric and nephelometric detecting system
Appareil de détection spectrophotométrique et néphélométrique

(30) Priorität: 08.10.1999 DE 19948587
(43) Veröffentlichungstag der Anmeldung: 11.04.2001
(73) Patentinhaber: Siemens Healthcare Diagnostics Products GmbH, 35041 Marburg (DE)
(72) Erfinder: Meller, Paul, Dr., 61273 Wehrheim (DE)

(56) Entgegenhaltungen:
- EP-A- 0 997 726
- FR-A- 2 792 725
- US-A- 4 053 229
- US-A- 4 325 910
- US-A- 4 730 922
- US-A- 5 400 137

## Beschreibung

Die vorliegende Erfindung betrifft ein Verfahren und eine Vorrichtung zur im wesentlich gleichzeitigen Durchführung von spektralphotometrischen und nephelometrischen Analysen vor allem in der in-vitro Diagnostik.

Während sich in den letzten Jahren einerseits eine zunehmende Nachfrage nach empfindlicheren optischen Detektionsverfahren für die automatisierte in-vitro Laboranalytik entwickelte, wurden gleichzeitig Anforderungen für eine zunehmende Angleichung und Harmonisierung der analytischen Verfahren erhoben.

Diese Anforderungen werden vor dem Hintergrund der Konzentration der Zahl der Meßlabore in Form von wenigen Zentren für die Labordiagnostik verständlich. Nur durch eine weitergehende Anpassung der analytischen Verfahren, der Verringerung der Zahl an unterschiedlichen Gerätevarianten oder Verfahrensbedingungen, lassen sich die Teste einfach und ohne erhöhte Bedienungsanforderungen durchführen. Diese Bemühungen sollen dadurch zu einer weiteren Kostenersparnis auf dem Gebiet der Diagnostik führen.

Gleichzeitig wächst der Bedarf nach komplexeren, vollautomatisierten Analysegeräten. Um eine Vielzahl unterschiedlicher Proben und Probenarten bearbeiten zu können und den geforderten Durchsatz zu erreichen, werden diese Analysegeräte zusätzlich über entsprechende Netzwerke an Laborintegrationssysteme zu diskontinuierlichen Nachführung von Proben-, Test- oder Verbrauchsmaterial gekoppelt.

Eine Investition und spätere Auslastung derartiger vollautomatisierter Analyseautomaten läßt sich allerdings nur dann erreichen, wenn es gleichzeitig auch zu einer Harmonisierung in der Analytik der unterschiedlichen Anwendungsgebiete der in-vitro Diagnostik kommt. So wird bereits zum gegenwärtigen Zeitpunkt versucht, unter anderem Parameter der klinischen Chemie, der Plasmaproteindiagnostik oder der immunchemischen Diagnostik auf gemeinsamen Plattformen durchzuführen. Dies ist insbesondere dann erfolgreich, wenn die Anforderungen an die Verfahrenstechnik in den unterschiedlichen Anwendungsgebieten ähnlich sind. Häufig sind nämlich die Bedingungen für die Behandlung von Proben oder von Reagenzlösungen hinsichtlich Lagerung (Temperaturstabilität) oder Dosierung (Volumen, Präzision) in guter Übereinstimmung.

Die zunehmende Anpassung und Harmonisierung sollte sich somit folgerichtig auch auf die für die Analytik eingesetzten Detektionsverfahren erstrecken.

Die meisten der zur Zeit eingesetzten analytischen Methoden verwenden nur eine Art der Meßdatengewinnung, wie sie die Photometrie oder die Lichtstreuung bieten. In bestimmten Analyseverfahren wird die Lichtstreuung unter verschiedenen Winkeln bzw. Winkelbereichen erfaßt. Besonders für Verfahren, bei denen die Bildung und zeitliche Änderung von Streuzentren erfaßt wird, wie das bei Agglutinationstesten oder bei Verfahren der partikelverstärkten in-vitro Diagnostik der Fall ist, sind Streulichtmethoden äußerst empfindlich und in der Auflösung photometrischen Verfahren überlegen. Ausführliche Betrachtungen und Berechnungen zur Theorie des Streulichts sind dem Fachmann an sich hinlänglich bekannt und Lehrbuchwissensstand (so zum Beispiel C.F. Bohren, D.R. Huffman, Absorption and Scattering of Light by Small Particles, J. Wiley &Sons, 1983). Weitere Aspekte der Anwendung auf in-vitro Diagnostik-Teste sind u,a. in E.P. Diamandis et al. 1997 ( Immunoassay , Academic Press, 1997, Kapitel 17: Nephelometric and Turbidimetric Immunoassay) und den darin aufgeführten Referenzen zu finden.

Andererseits besteht für viele Testverfahren die Anforderung in der Durchführung photometrischer Teste, die reine Absorption erfassen. In diesen Fällen versagt das Streulichtsignal, da bestenfalls die in dem Meßgut sich befindenden Verunreinigungen gemessen werden können.

Zum Beispiel werden in DE-A 2409273 und in US-Patent 4,408,880 Verfahren beschrieben, bei denen eine Probe durch einen Laserstrahl angeregt wird und deren Streulicht unter einem Winkel außerhalb Strahlachse des einfallenden Lichts erfaßt wird. Die Ausblendung des für die Messung verwendeten Streulichts erfolgt durch eine geeignet geformte Ringblende, die das Anregungslicht des Lasers zurückhält.

In US-Patent 4,053,229 wird ebenfalls eine Vorrichtung zur Messung von Streulicht beschrieben, bei der gleichzeitig unter einem Winkel von 2° und unter einem Winkel von 90° eine Streulichtmessung erfolgt.

In US 5,400,137 wird eine Vorrichtung zur gleichzeitigen Fluoreszenz- und Trübungsmessung beschrieben, ohne daß ein Lichtstrahl durch ein optisches Material hindurchgeht (reine Reflexionsmessung).

In US 4,325,910 wird eine Analysevorrichtung offenbart, die ein Photometer enthält, welches Licht von einer einzigen Lichtquelle auf mehrere Lichtwege verteilt um so mehrere photometrische Messungen durchzuführen.

WO 98/00701 beschreibt eine Kombination eines Nephelometers mit einem Turbidimeter, die aus zwei Lichtquellen besteht. Während eine davon als Laser das Streulicht erzeugt, das unter 90° erfaßt wird, dient eine im infraroten Spektralbereich emittierende Diode (LED) dazu, die Trübung in der Achse des einfallenden Lichts zu messen. Das in der Anmeldung beschriebene Verfahren dient dabei insbesondere einer verbesserten Kontrolle der Intensität des verwendeten Lasers.

Es sind bisher keine Verfahren und/ oder Vorrichtungen bekannt, die es ermöglichen, sowohl Streulichtmessungen als auch photometrische Messungen im wesentlichen gleichzeitig durchzuführen.

Der vorliegenden Erfindung lag also die Aufgabe zugrunde, eine Vorrichtung zu finden, in der die im wesentlichen gleichzeitige spektralphotometrische und nephelometrische Messung in einer Probe innerhalb einer Baugruppe möglich ist.

Im wesentlichen gleichzeitig heißt dabei, daß die Messpunkte der spektralphotometrischen Bestimmung und die der nephelometrischen Bestimmung, zeitlich so dicht aufeinanderfolgen, wie es für die Art der Messung erforderlich ist. Bei kinetischen Messungen wird der zeitliche Abstand kürzer sein müssen, als zum Beispiel bei Endpunktmessungen, bei denen der zeitliche Abstand der Messungen im wesentlichen durch die mechanische Größe der Rotations-/ Translationsbewegung der Messzelle im Verhältnis zum Messort bestimmt wird. Bei kinetischen Messungen hingegen muss der zeitliche Abstand so kurz wie möglich sein.

Die vorliegende Erfindung beschreibt eine Vorrichtung in der eine Kombination von Verfahren zur Durchführung von in-vitro Diagnostika Analysen, die auf dem Prinzip der Streulichtmessung und der Spektralphotometrie basieren, möglich ist.

Dabei können durch die Meßeinheit Verfahren der Photometrie und der Streulichtmessung im wesentlichen gleichzeitig eingesetzt werden. Eine oder mehrere Lichtquellen 1, 2 werden über eine gemeinsame Strahlführung längs einer Strahlachse 24 an den Reaktionsort 11 geführt. Über Sensoren 17 und 25 können Streulicht- oder photometrische Signale detektiert werden. Durch eine pulsförmige Ansteuerung werden
beide Verfahren zeitlich so entkoppelt, daß es nicht zu wechselseitigen Beeinflussung oder Störungen während des Betriebs kommt.

Während die Nephelometrie überwiegend für die Analyse von Agglutinationstesten und in der partikelverstärkten Immundiagnostik eingesetzt wird, dient die Photometrie zur Messung zahlreicher weiterer auf spektralen Änderungen basierenden klinisch-chemischen Parametern. Durch die Kombination erreicht man das Ziel, eine Vielzahl unterschiedlicher diagnostischer Teste der klinischen Chemie, der Immundiagnostik, der Plasmaproteindiagnostik oder der Gerinnungsdiagnostik auf einem einzigen Modul durchführen zu können.

Die vorliegende Beschreibung bezieht sich auf das Gebiet des Einsatzes von automatisierten Meßsystemen in der Analytik und in der in-vitro Diagnostik. Insbesondere wird durch die beschriebene Vorrichtung die gleichzeitige Durchführung von Testen möglich, die mit Hilfe einer Streulichtmessung und/oder durch Photometrie im UV-Vis- Spektralbereich gemessen werden.

Insbesondere läßt sich die Einheit in Systeme integrieren, bei denen die Messung einer Vielzahl von Proben und Testen in Messküvetten auf einem gemeinsamen Rotor oder Karussell durchgeführt wird, wie es für automatische Analysensysteme häufig der Fall ist.

Erfindungsgemäß wurde eine Vorrichtung entwickelt, durch die es möglich ist, sowohl das unter Winkeln außerhalb der Achse des einfallenden Lichtes erzeugte Streulicht einer Probe, als auch das unter Winkeln um 0° durchgehende Licht zu messen.

Unterschiedliche schmalbandige oder breitbandige Lichtquellen können zur Anregung des Meßguts eingesetzt werden. Diese werden auf einer gemeinsamen Strahlführung an den Reaktionsort geführt. Aufgrund der pulsförmigen Ansteuerung der Lichtquellen sind gegenseitige Störungen oder Interferenzen vollständig unterdrückbar.

Ebenfalls ist es ein Ziel des beschriebenen Verfahrens, eine Validierung des Strahlengangs und der eingesetzten Komponenten, wie der Lichtquelle, der optischen Komponenten von Linsen und Blenden und der durch die bewegten Aufahmegefäße des Meßguts (Küvetten) hervorgerufenen Eigenschaften durchzuführen.

Im folgenden wird das erfindungsgemäße Verfahren und eine Vorrichtung beispielhaft anhand von lediglich einer Ausführungsform näher erläutert.

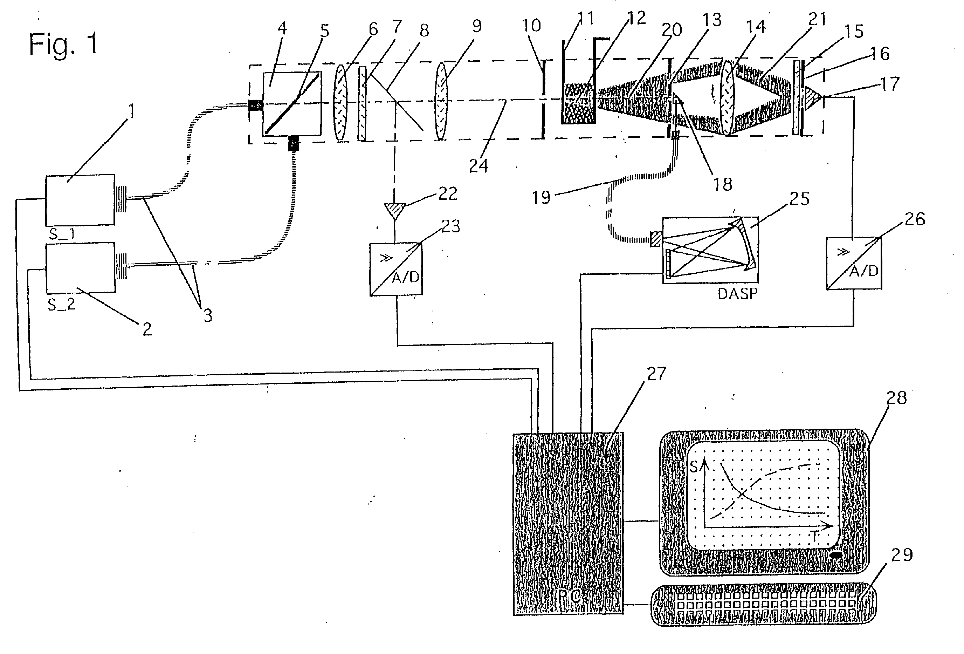

Fig. 1 zeigt schematisch eine Anordnung von Lichtquellen 1,2, Meßgutaufnahme 11 (Küvette) und Detektoren 17,22,25. Wie daraus ersichtlich, werden bei beiden Methoden Raumwinkel um die Achse des einfallenden Lichts ausgenutzt. In der zumeist verwendeten Anordnung zur Streulichtmessung wird das gestreute Licht unter einem Winkel von 90° erfaßt. Dadurch läßt sich eine Trennung des einfallenden Lichts zu dem gestreuten Licht besonders leicht erreichen. Andererseits können durch Wahl eines größeren Raumwinkelbereichs und unter Ausnutzung von Winkeln oder Winkelbereichen um die Vorwärtsrichtung des einfallenden Lichts höhere Intensitäten des Streulichts erreicht werden, wodurch sich eine Anordnung technisch einfacher und kostengünstiger aufbauen läßt. Gerade für die gemäß der vorliegenden Beschreibung angestrebten Messungen an organischen Makromolekülen unter Ausnutzung eines partikelverstärkten Immunoassays für den Einsatz in der humanen in-vitro Diagnostik ist der Anteil an Streulicht bei Winkeln um die Vortwärtsrichtung besonders hoch.

Die für die Analytik eingesetzten Lichtquellen 1,2 weisen gemäß der angestrebten Anwendung unterschiedliche spektrale Bandbreiten auf. Während eine Lichtquelle für die Streulichtmessung eine schmalbandige Emission im roten oder infraroten Spektralbereich aufweist, vorzugsweise im Bereich zwischen 650 und 950 nm, emittiert die Lichtquelle für photometrische Messungen typischerweise in einem Spektralbereich zwischen 300 und 800 nm. In der vorliegenden Ausführung werden beide Lichtquellen im Pulsbetrieb eingesetzt.

Zur gemeinsamen Strahlführung und Anregung der Meßküvette wird das Licht beider Quellen beispielsweise über optische Lichtwellenleiter oder Faserbündel auf eine Kopplungseinheit 4 geführt und über geeignete optische Komponenten ausgekoppelt. Ein speziell für die beiden Bandbreiten angepaßter dichroitischer Strahlteiler 5 ermöglicht es, beide Lichtquellen auf der gemeinsamen Strahlachse 24 zu führen. Mit Hilfe entsprechender Linsen 6,9 wird der Strahl für die spätere Messung kollimiert. Über einen weiteren Strahlteiler 8 kann ein Bruchteil der einfallenden Lichte zur Referenzmessung 22,23 ausgeblendet werden.

Der durch eine Blende 10 auf das sich in einer Küvette 11 befindliche Meßgut 12 auftreffende Lichtstrahl führt je nach Art des Meßgut zu Streuung oder Absorption.

Infolge der pulsförmigen Anregung beider Lichtquellen, können beide Verfahren allerdings unabhängig voneinander durchgeführt werden. Die für die Auslösung einer der Lichtquellen notwendige Information kann dabei über eine vor der Messung notwendige Testdefinition gewählt werden und ist damit dem System während der Durchführung der Messung bekannt.

Die physikalische Trennung des in der Achse durchgehenden und des gestreuten Lichtes 20 erfolgt durch eine in der Strahlachse angeordnete Blende 13. Die Blende ist dabei vorteilhafterweise so gestaltet, daß sie einerseits als Streulichtfalle und andererseits als Umlenkungseinheit für das in der Achse einfallende Licht dient. Die Blende ist dazu als Ring- und Lochblende aufgebaut. Durch die Wahl eines inneren und äußeren Durchmessers kann der für die Analyse günstigste Raumwinkelbereich ausgewählt werden. Der als Streulicht durch die Blende durchgehende Anteil wird mittels einer Linse oder eines Linsensystems 14 auf den Eingang eines Detektors 17 fokussiert.

Während es sich bei der Streulichtmessung üblicherweise um eine diskrete, schmalbandige Wellenlänge handelt, wird für die photometrische Messung eine breiterbandige Lichtquelle verwendet, so dass das für eine photometrische Messung verwendete Signal weiter ausgewertet werden sollte. Zu diesem Zweck wird das in der Strahlachse um 0° auftreffende Licht mit Hilfe der Blende 13 ausgekoppelt, deren zentraler Teil als Lochblende ausgebildet ist. Diese weist bevorzugterweise einen Durchmesser von 0,5 bis 3 mm auf, der den einfallenden Strahlquerschnitt begrenzt. Die Umlenkung des Strahls kann dabei durch ein Prisma 18 oder ein anderes geeignetes Lichtführungssystem, wie beispielsweise ein entsprechend gekrümmtes Faserbündel erfolgen. Die Einkopplung des Lichts in das Faserbündel 19 erfolgt mittels der dem Fachmann bekannten optischen Komponenten. Das Faserbündel dient nachfolgend als Eingangsspalt eines Spektrofotometers 25. Als Spektrofotometer wird dabei das bekannte Prinzip einer Diodenzeile verwendet, das ohne mechanische Komponenten ausgestattet, eine kurze Meßzeit bei voller spektraler Bandbreite zuläßt.

Nach Auswertung des Signals und Erhalt des Spektrums i=f(λ) werden die Daten zur weiteren Verarbeitung einem Rechner 27 zugeführt.

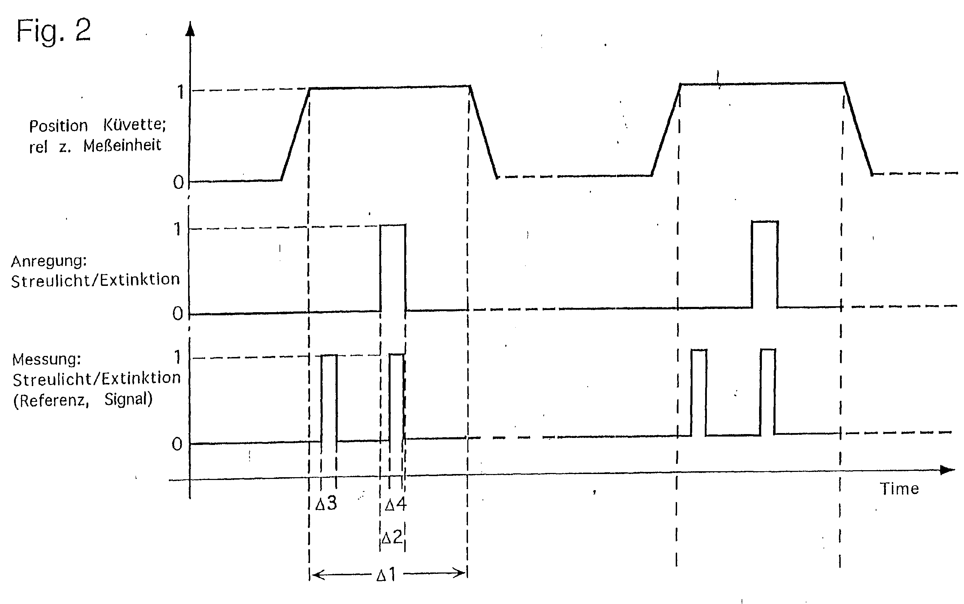

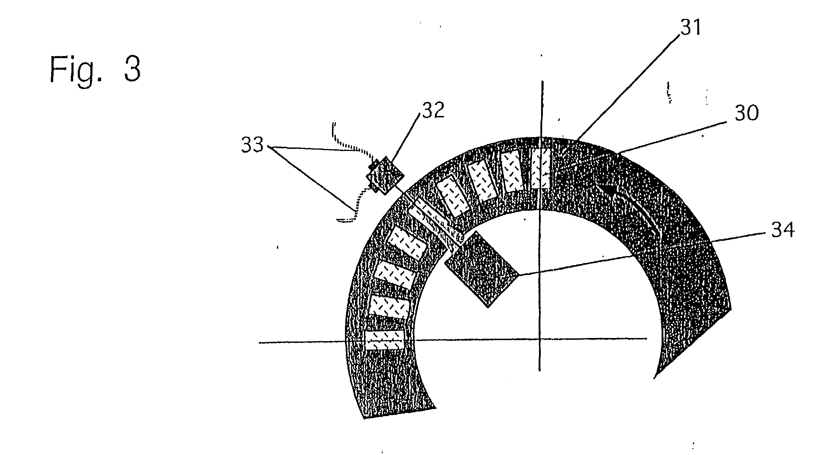

Erfindungsgemäß wird die beschriebene Anordnung häufig in Analysesystemen eingesetzt, in denen für einen erhöhten Durchsatz eine Vielzahl von Messküvetten gleichzeitig prozessiert werden sollen. Zu diesem Zweck werden die Küvetten 11 auf einem drehbaren Karussell oder Rotor positioniert, wie beispielsweise aus Fig. 3 ersichtlich. Daraus wird ebenfalls die günstige Einsatzweise des Pulsbetriebs gemäß Fig. 2 klar: Wenn sich eine Küvette 11 innerhalb eines Zeitintervalls Δ1 in dem durch die Meßoptik zugänglichen Bereichs 32,34 befindet, kann ein Impuls (Δ2) einer der verfügbaren Lichtquellen 1,2 ausgelöst werden, der über 33 und die Kopplungseinheit 32 auf die Küvette 11 aufgebracht wird. Das daraus gewonnene Signal wird innerhalb des Zeitintervalls Δ4 erfaßt. Je nach Art des Testes und des dazugehörenden Auswerteverfahrens wird der transmittierte oder gestreute Anteil des Lichts durch die Sensoren 17 bzw. 25 erfaßt. Die Art der Ansteuerung ermöglicht somit eine vollständig getrennte Anregung des Meßgutes durch die verschiedenen Lichtquellen und weist keine gegenseitige Beeinflussung des gestreuten oder des durchgehenden Lichts auf. Ein in Fig. 2 dargestelltes zusätzliches Zeitintervall Δ3 dient dabei der möglichen Erfassung eines Referenzsignals durch Sensor 17 und 22 zum Abgleich eines Dunkelwertes.

Durch zyklische Drehung eines mit Küvetten bestückten Karussells 31 kann eine nachfolgende Küvette gemessen werden.

Neben diesen beiden primären Methoden lassen sich eine Vielzahl von Möglichkeiten erschließen, bei denen die beiden Methoden sich ergänzen:
1. Kalibration der Lichtquelle durch das Spektrofotometer 25: Die kurzzeitige Einführung eines Standards 7 in den Strahlengang kann zur Bestimmung der Wellenlängen oder Absorption verwendet werden.
2. Prüfung der Positionierung einer sich im Bereich der Meßeinheit befindlichen Küvette: Zyklische Bewegung einer sich auf dem Rotor befindlichen Küvette ermöglicht die Aufnahme eines ortsabhängigen Küvettenprofils und deren weitere Positionsbestimmung.
3. Fluoreszenz-/Chemolumineszenz-Modus: Mittels einer der Lichtquellen 1,2 ggfls. unter Ausnutzung weiterer Filter 7 kann ein in der Küvette 11 befindliches Messgut 12 selektiv angeregt werden. Über den Detektor 17 läßt sich das resultierende Fluoreszenzlicht u.U. durch Einsatz weiterer Blockungsfilter 15 erfassen.

### Beschreibung der Figuren

Fig. 1 zeigt eine schematische Übersicht einer nachfolgend näher beschriebenen Ausführungsform der Analyseeinheit.
Fig. 2 gibt ein Zeitdiagramm der Ansteuerung der verschiedenen Lichtquellen und der Messwertaufnahme wieder.
Fig. 3 zeigt den Einsatz der Meßeinheit innerhalb eines drehbaren Rotors zur Aufnahme einer Vielzahl an kreisförmig angeordneten Messküvetten.

### Bezugszeichenliste zu den Figuren:

- 1.: Lichtquelle 1
- 2.: Lichtquelle 2
- 3.: Lichtführung (Faserbündel)
- 4.: Kopplungseinheit
- 5.: Strahlteiler (dichroitisch)
- 6.: Linsensystem/Linse 1
- 7.: Filter
- 8.: Strahlteiler
- 9.: Linsensystem/Linse 2
- 10.: Blende
- 11.: Küvette/Reaktionsort
- 12.: Messgut
- 13.: Blende
- 14.: Linsensystem/Linse
- 15.: Blockungsfilter
- 16.: Blende
- 17.: Sensor/Detektor
- 18.: Strahlumlenkung (z. B. Prisma)
- 19.: Faserbündel-Lichtwellenleiter
- 20.: aus Küvette austretendes Licht
- 21.: Streulicht
- 22.: Sensor für Referenzmessung
- 23.: A/D Wandler
- 24.: Gemeinsame Strahlachse
- 25.: Spektrofotometer
- 26.: A/D Wandler
- 27.: Rechner
- 28.: Bildschirm
- 29.: Tastatur
- 30.: Küvette/Reaktionsort
- 31.: Karussell/Rotor zur Küvettenaufnahme
- 32.: Beleuchtungseinheit mit Lichtwellenleitereinkopplung
- 33.: Strahlführung
- 34.: Detektionseinheit

## Patentansprüche

1. Vorrichtung zur Durchführung von optischen Messungen, beinhaltend einen ersten Sensor (17), einen zweiten Sensor (25) und einen dritten Sensor (22), wobei die Sensoren zur Lichtmessung geeignet sind und eine gemeinsame Strahlführung längs einer Strahlachse (24) mit zwei angekoppelten Lichtquellen (1, 2) unterschiedlicher Spektralbereiche zur Führung des Lichts an den gewünschten Meßort, umfassend die in der angegebenen Reihenfolge angeordneten Elemente:
a) mindestens einen dichroitischen Strahlteiler (5) zur Vereinigung des von den Lichtquellen ausgehenden Lichts unterschiedlicher Spektralbereiche,
b) eine Küvette (11) als Meßort und
c) mindestens eine Blende (13),
worin die Blende (13) als Ring- und Lochblende ausgebildet ist, die einerseits das unter einem bestimmten Raumwinkelbereich auf die Blende auftreffende Streulicht und andererseits das unter kleinen Winkeln um 0° auf die Blende auftreffende transmittierte Licht durchläßt, und worin der erste Sensor (17) das Streulicht, der zweite Sensor (25) das transmittierte Licht und der dritte Sensor (22) einen Teil des einfallenden Lichts als Referenz mißt.

2. Vorrichtung gemäß Anspruch 1, wobei eine der Lichtquellen (1, 2) aus einer im UV-Vis Spektralbereich, vorzugsweise im Bereich zwischen 320 und 750 nm, emittierenden Quelle besteht.

3. Vorrichtung gemäß Anspruch 1, wobei es sich bei einer der Lichtquellen (1, 2) um eine Xenon-Pulslichtquelle handelt.

4. Vorrichtung gemäß Anspruch 1, wobei eine der Lichtquellen (1, 2) im roten oder infraroten (NIR) Spektralbereich, vorzugsweise zwischen 600 und 900 nm, emittiert.

5. Vorrichtung gemäß Anspruch 1, wobei es sich bei einer der Lichtquellen (1, 2) um eine Laserdiode oder lichtemittierende Diode (LED) handelt.

6. Vorrichtung gemäß Anspruch 5, wobei eine der Lichtquellen (1, 2) eine IR-LED ist, die im Bereich zwischen 800 und 950 nm emittiert.

7. Vorrichtung gemäß Anspruch 1 bis 6, wobei die Lichtquellen (1, 2) im Pulsbetrieb eingesetzt werden.

8. Vorrichtung gemäß Anspruch 1, worin die gemeinsame Strahlführung (24) aus flexiblen Lichtleiterfasern besteht.

9. Vorrichtung gemäß Anspruch 1 versehen mit einem Einschub zur Aufnahme von Filtern, die der Kalibration der verwendeten Lichtquellen hinsichtlich deren Wellenlängen oder Absorption dienen.

10. Vorrichtung gemäß Anspruch 1 versehen mit Blenden (10, 16) zur Begrenzung des verfügbaren Strahlbereichs.

11. Vorrichtung gemäß Anspruch 1 versehen mit einem teildurchlässigen Spiegel (8) zur Erfassung eines definierten Anteils des einfallenden Lichtes als Referenz.

12. Vorrichtung gemäß Anspruch 1, bei der das transmittierte Licht unter Winkeln <5° um die Vorwärtsrichtung des einfallenden Lichtes erfaßt wird.

13. Vorrichtung gemäß Anspruch 1, worin das auftreffende transmittierte Licht mit Hilfe einer Strahlumlenkung (18) aus dem Strahlengang herausgeführt wird.

14. Vorrichtung gemäß Anspruch 13, worin die Strahlumlenkung (18) aus starren optischen Komponenten oder aus Lichiwellenleitern mit entsprechenden Anschlußkomponenten besteht.

15. Vorrichtung gemäß Anspruch 1, bei der das durch die Blende (13) hindurchtretende Streulicht durch ein Linsensystem auf den Eingang eines Detektors (17) abgebildet wird.

16. Vorrichtung gemäß Anspruch 1, versehen mit Filtern (7) zur Abtrennung und Unterdrückung von Licht unerwünschter Wellenlängenbereiche.

17. Vorrichtung gemäß Anspruch 1 versehen mit opto-elektronischen Komponenten zur pulsförmigen Ansteuerung der eingesetzten Lichtquellen.

18. Vorrichtung gemäß Anspruch 1 versehen mit elektronischen Komponenten (23, 26) zur Verstärkung und Wandlung der Signale zur weiteren messtechnischen Verarbeitung.

19. Vorrichtung gemäß Anspruch 1 versehen mit einer Prozessoreinheit (27) zur gemeinsamen Steuerung der Komponenten, Auswertung und Darstellung der Signale.

20. Vorrichtung gemäß Anspruch 1, mit welcher das Streulicht und das transmittierte Licht im wesentlichen gleichzeitig erfaßt werden können.

21. Verwendung einer Vorrichtung gemäß mindestens einem der Ansprüche 1 bis 20 in einem spektralfotometrischen und nephelometrischen Analysator in der in-vitro Diagnostik.

## Claims

1. Apparatus for carrying out optical measurements, comprising a first sensor (17), a second sensor (25) and a third sensor (22), the sensors being suitable for measuring light, and a common beam guidance arrangement along a beam axis (24) with two coupled light sources (1, 2) with different spectral regions for guiding the light to the desired measurement location, comprising the following elements arranged in the order indicated:
a) at least one dichroic beam splitter (5) for combining the light from different spectral regions that emerges from the light sources,
b) a cuvette (11) as measurement location, and
c) at least one diaphragm (13),
wherein the diaphragm (13) is embodied as an annular and perforated diaphragm which transmits,
on the one hand, the scattered light impinging on the diaphragm at a specific solid angle range and,
on the other hand, the transmitted light impinging on the diaphragm at small angles around zero degrees, and wherein the first sensor (17) measures the scattered light, the second sensor (25) measures the transmitted light and the third sensor (22) measures part of the incident light as reference.

2. Apparatus according to Claim 1, where one of the light sources (1, 2) comprises a source which emits in the UV-Vis spectral region, preferably in the range between 320 and 750 nm.

3. Apparatus according to Claim 1, where one of the light sources (1, 2) is a xenon pulsed light source.

4. Apparatus according to Claim 1, where one of the light sources (1, 2) emits in the red or infrared (NIR) spectral region, preferably between 600 and 900 nm.

5. Apparatus according to Claim 1, where one of the light sources (1, 2) is a laser diode or light-emitting diode (LED).

6. Apparatus according to Claim 5, where one of the light sources (1, 2) is an IR-LED which emits in the range between 800 and 950 nm.

7. Apparatus according to Claims 1 to 6, where the light sources (1, 2) are used in pulsed operation.

8. Apparatus according to Claim 1, wherein the common beam guidance arrangement (24) comprises flexible optical fibres.

9. Apparatus according to Claim 1, provided with an insert for accommodating filters which are used for calibration of the light sources used with regard to said sources' wavelengths or absorption.

10. Apparatus according to Claim 1, provided with diaphragms (10, 16) for limiting the available beam range.

11. Apparatus according to Claim 1, provided with a partly transparent mirror (8) for detecting a defined proportion of the incident light as reference.

12. Apparatus according to Claim 1, in which the transmitted light is detected at angles of <5° around the forward direction of the incident light.

13. Apparatus according to Claim 1, wherein the impinging transmitted light is guided out from the beam path with the aid of a beam deflection arrangement (18).

14. Apparatus according to Claim 13, wherein the beam deflection arrangement (18) comprises rigid optical components or optical waveguides with corresponding connection components.

15. Apparatus according to Claim 1, in which the scattered light passing through the diaphragm (13) is imaged onto the input of a detector (17) by a lens system.

16. Apparatus according to Claim 1, provided with filters (7) for separating out and suppressing light of undesirable wavelength ranges.

17. Apparatus according to Claim 1, provided with optoelectronic components for the pulsed driving of the light sources used.

18. Apparatus according to Claim 1, provided with electronic components (23, 26) for amplification and conversion of the signals for further measurement processing.

19. Apparatus according to Claim 1, provided with a processor unit (27) for common control of the components, evaluation and presentation of the signals.

20. Apparatus according to Claim 1, with which the scattered light and the transmitted light can be detected substantially simultaneously.

21. Use of an apparatus according to at least one of Claims 1 to 20 in a spectrophotometric and nephelometric analyzer in in-vitro diagnosis.

## Revendications

1. Dispositif pour effectuer des mesures optiques, comprenant un premier capteur ( 17 ), un deuxième capteur ( 25 ) et un troisième capteur ( 22 ), les capteurs étant propres à mesurer de la lumière, et un guidage commun de faisceau le long d'un axe ( 24 ) de faisceau ayant deux sources ( 1, 2 ) lumineuses couplées de domaines spectraux différents, pour guider la lumière sur l'emplacement de mesure souhaité, comprenant les éléments disposés dans l'ordre indiqué :
a) au moins un diviseur ( 5 ) de faisceau dichroïque pour réunir la lumière de domaines spectraux différents issue des sources lumineuses,
b) une cuvette ( 11 ) comme emplacement de mesure,
c) un diaphragme ( 13 ),
dans lequel le diaphragme (13) est constitué sous la forme d'un diaphragme annulaire et troué, qui, d'une part, laisse passer la lumière diffusée arrivant sur le diaphragme suivant une plage d'angles solides déterminée et, d'autre part, laisse passer la lumière transmise arrivant sur le diaphragme sous des angles petits d'environ 0° et dans lequel le premier capteur ( 17 ) mesure la lumière diffusée, le deuxième capteur ( 25 ) la lumière transmise et le troisième capteur ( 22 ) une partie de la lumière incidente comme témoin.

2. Dispositif suivant la revendication 1, dans lequel l'une des sources (1, 2 ) lumineuses est constituée d'une source ( 1 ) émettant dans un domaine spectral UV-Vis, de préférence dans le domaine compris entre 320 et 750 nm.

3. Dispositif suivant la revendication 1, dans lequel l'une des sources ( 1, 2 ) lumineuses est une source de lumière pulsée au xénon.

4. Dispositif suivant la revendication 1, dans lequel l'une des sources ( 1, 2 ) lumineuses émet dans le domaine spectral rouge ou infrarouge ( NIR ), de préférence entre 600 et 900 nm.

5. Dispositif suivant la revendication 1, dans lequel l'une des sources ( 1, 2 ) lumineuses est une diode laser ou une diode ( DEL ) électroluminescente.

6. Dispositif suivant la revendication 5, dans lequel l'une des sources ( 1, 2 ) lumineuses est une DEL IR, qui émet dans le domaine compris entre 800 et 950 nm.

7. Dispositif suivant l'une des revendications 1 à 6, dans lequel les sources ( 1, 2 ) lumineuses sont utilisées en mode pulsé.

8. Dispositif suivant la revendication 1, dans lequel le guidage ( 24 ) commun de faisceau est constitué de fibres optiques souples.

9. Dispositif suivant la revendication 1, muni d'un tiroir pour la réception de filtres, qui servent à l'étalonnage des sources lumineuses utilisées, en ce qui concerne leur longueur d'ondes ou leur absorption.

10. Dispositif suivant la revendication 1, muni de diaphragmes ( 10, 16 ) pour la délimitation de la partie du faisceau disponible.

11. Dispositif suivant la revendication 1, muni d'un miroir ( 8 ) semi-transparent pour la prise d'une proportion définie de la lumière incidente comme témoin.

12. Dispositif suivant la revendication 1, dans lequel la lumière transmise est détectée sous des angles < 5° autour de la direction de propagation de la lumière incidente.

13. Dispositif suivant la revendication 1, dans lequel la lumière transmise qui arrive est sortie du trajet du faisceau à l'aide d'une déviation ( 18 ) de faisceau.

14. Dispositif suivant la revendication 13, dans lequel la déviation ( 18 ) de faisceau est constituée d'éléments optiques rigides ou de guides d'ondes lumineuses ayant des composants adéquats de raccordement.

15. Dispositif suivant la revendication 1, dans lequel la lumière diffusée traversant le diaphragme ( 13 ) est projetée par un système de lentilles à l'entrée d'un détecteur ( 17 ).

16. Dispositif suivant la revendication 1, muni de filtres ( 16 ) de séparation et de suppression de la lumière de domaine de longueurs d'ondes qui ne sont pas souhaitées.

17. Dispositif suivant la revendication 1, muni de composants optoélectroniques pour la commande pulsée des sources lumineuses utilisées.

18. Dispositif suivant la revendication 1, muni de composants ( 23, 26 ) électroniques d'amplification et de transformation des signaux pour un traitement ultérieur en technique de mesure.

19. Dispositif suivant la revendication 1, muni d'une unité ( 27 ) de processeur pour la commande commune des composants, l'exploitation et la représentation des signaux.

20. Dispositif suivant la revendication 1, par lequel la lumière diffusée et la lumière transmise peuvent être détectées sensiblement en même temps.

21. Utilisation d'un dispositif suivant au moins l'une des revendications 1 à 20, dans un analyseur spectrophotométrique et néphélométrique dans le diagnostic in-vitro.
